# EUROPEAN PATENT SPECIFICATION

(11) **EP 4 205 422 B1**
(45) Date of publication and mention of the grant of the patent: **12.11.2025**
(21) Application number: 21759081.9
(22) Date of filing: 13.08.2021
(51) Int. Cl.: H04W 4/46, G08G 1/16, B60W 30/18

(54) **METHOD OF COORDINATING A MANEUVER AMONG VEHICLES**
VERFAHREN ZUR KOORDINATION EINES MANÖVERS ZWISCHEN FAHRZEUGEN
PROCÉDÉ DE COORDINATION D'UNE MANOEUVRE ENTRE DES VÉHICULES

(30) Priority: 25.08.2020 DE 102020122232
(43) Date of publication of application: 05.07.2023
(73) Proprietor: Bayerische Motoren Werke Aktiengesellschaft, 80809 München (DE)
(72) Inventor: HAEFNER, Bernhard, 81375 München (DE)
(86) International application number: PCT/EP2021/072612
(87) International publication number: WO 2022/043099

(56) References cited:
- US-A1- 2019 130 755
- LEHMANN BERND ET AL: "A Generic Approach towards Maneuver Coordination for Automated Vehicles", 2018 21ST INTERNATIONAL CONFERENCE ON INTELLIGENT TRANSPORTATION SYSTEMS (ITSC), IEEE, 4 November 2018 (2018-11-04), pages 3333 - 3339, XP033470090, ISBN: 978-1-7281-0321-1, [retrieved on 20181207], DOI: 10.1109/ITSC.2018.8569442
- HES DANIEL ET AL: "Negotiation of Cooperative Maneuvers for Automated Vehicles: Experimental Results", 2019 IEEE INTELLIGENT TRANSPORTATION SYSTEMS CONFERENCE (ITSC), IEEE, 27 October 2019 (2019-10-27), pages 1545 - 1551, XP033668835, DOI: 10.1109/ITSC.2019.8917464

## Description

This specification refers to a method of coordinating a maneuver among vehicles as well as to computing devices being configured for executing such a method. In particular, this specification refers to aspects of a protocol for synchronizing the execution of a cooperative maneuver that has been negotiated among at least a first vehicle and a second vehicle, wherein the vehicles may be Connected and Automated Vehicles (CAVs).

In the field of autonomous driving, it is widely accepted that automated vehicles will have to be connected so as to create mutual awareness and coordinate maneuvers. How this interaction among automated vehicles shall be achieved in detail is, however, still an open issue. Several new protocols are currently discussed for cooperative services such as changing lanes or overtaking, e.g., within the European Telecommunications Standards Institute (ETSI) and SAE International. These communication protocols are usually specific to individual maneuvers or based on implicit assumptions on other vehicles' intentions.

Further, besides internet connectivity for infotainment use cases, direct communication among traffic participants, Vehicle-to-Everything (V2X), is already very close to becoming a reality. Even though this has been proclaimed for more than ten years, things have changed, recently. Standards regarding basic safety can be regarded as almost mature, and first Original Equipment Manufacturers (OEMs) start deploying basic V2X services in series production vehicles, despite not all questions having been answered, yet.

Attention has recently shifted from basic warning services to how vehicular communication can support cooperative and automated driving. Those so-called Day 2 or Day 3 services will change the way vehicles interact with each other [1], on urban and highway roads as well as on intersections [2], [3]. They use V2X to enable negotiations among vehicles and leverage distributed intelligence, further increasing safety and convenience. First standardization efforts of such advanced services have started in Europe [4] and the United States [5].

Recently, many researchers have started to investigate complex interactions. For example, Bürger *et al.* [7] defined a cooperative action to be *willingly and knowingly executed with the intention to work towards a common goal,* i.e. a joint optimum. They classify cooperation depending on exchanged information (*information-based*) and the optimization goal for a joint action (*maneuver-based*)*.* In the highest stage, total utility is optimized by sharing state information, intentions, and individual utilities.

Generally, cooperative behavior protocols can be divided into *implicit* and *explicit* ones.

With implicit approaches, vehicles share intentions periodically and have to infer from the potentially changed intentions received from others, whether their proposal has been accepted or not [8]. For example, in IMAGinE [9], every vehicle periodically broadcasts its *planned trajectory* as beacon. If a trajectory update is to be initiated, a *desired* trajectory is sent, additionally. Other vehicles evaluate a change of their own planned trajectory in order to make the desired trajectory possible. Based on received updated plans, the initiating vehicle can judge whether it can change its planned trajectory or not. TransAID [10] adds the possibility of trajectory proposals by Road Side Units (RSUs) as traffic coordinators.

Approaches based on explicit coordination are conceptually different. The idea is that a vehicle's desired maneuver has to be explicitly *committed to* or *acknowledged* from relevant actors to be sure the proposal has been accepted. In [6], a lane change protocol is suggested. A *Lane Change Request* is broadcast, and answered via a unicast *Lane Change Response.* Based on the feedback, a suitable peer vehicle is selected which will make space for the initiator, announcing having finished this with a *Lane Change Prepared* message. Now the initiator changes lane without further communication.

Another way of explicit cooperation is the space-time reservation procedure [11]: a vehicle sends a *request* for some static or moving lane-level road space. Other vehicles will evaluate this in terms of inferred cost and send a *commit* message if they accept it. Vehicles not sending a commit message are either unwilling to participate or not able to take part in the negotiation; their behaviors have to be predicted based on an uncooperative movement model. Considering all received commits, the initiating vehicle will determine whether it is safe to enter the reserved road space and if yes do so, without further communication.

Franke *et al.* present a protocol where each vehicle announces possible maneuvers and associated costs, and an optimal subset of maneuvers is chosen for execution [12].

According to a concept proposed by Lehmann *et al.,* a vehicle's planned maneuver is shared with surrounding traffic participants. Such inter-vehicle communications reduces the uncertainty associated to the prediction of future vehicle maneuvers. In case of conflicting maneuvers, vehicles are given the opportunity to disseminate a desired trajectory in addition to its planned trajectory. Maneuver coordination is then established in a three-step implicit distributed fashion, based on common right-of-way rules and on both disseminated types of trajectories (see LEHMANN BERND ET AL: "A Generic Approach towards Maneuver Coordination for Automated Vehicles", 2018 21ST INTERNATIONAL CONFERENCE ON INTELLIGENT TRANSPORTATION SYSTEMS (ITSC), IEEE, 4 November 2018 (2018-11-04), pages 3333-3339, XP033470090, DOI: 10.1109/ITSC.2018.8569442).

US 2019/0130755 A1 describes a lane scheduling method including: receiving, by a management device, a road resource allocation request sent by a vehicle, where the road resource allocation request includes a road segment identifier that is used to identify a logical road segment expected to be used by the vehicle; allocating a road resource to the vehicle based on the road resource allocation request, where the road resource includes at least one logical lane corresponding to the at least one road segment identifier; and sending a lane identifier of the at least one logical lane to the vehicle.

According to a space-time reservation procedure presented by Hess *et al.,* reservation messages are employed to negotiate a cooperative lane change via Vehicle-to-Vehicle radio in an urban scenario with non-trivial road-geometry (see HESS DANIEL ET AL: "Negotiation of Cooperative Maneuvers for Automated Vehicles: Experimental Results", 2019 IEEE INTELLIGENT TRANSPORTATION SYSTEMS CONFERENCE (ITSC), IEEE, 27 October 2019 (2019-10-27), pages 1545-1551, XP033668835, DOI: 10.1109/ITSC.2019.891 7464).

The mentioned approaches have certain limitations. In particular, most known protocols enable very specific maneuvers (e.g., lane changes), requiring adjustments for every new use case [6]. Further, for implicit approaches, vehicles have to guess whether other vehicles understood the own proposal or are just coincidentally changing their trajectory. This may yield very conservative CAVs. Moreover, periodically broadcasting trajectories results in heavy bandwidth usage, unnecessary if no maneuver is to be performed. How a generation rule for such periodic beacons should look like is another unsolved issue [10].

Recently, Häfner *et al.* [14] proposed a protocol framework for Complex Interactions among Connected Vehicles (CVIP), which allows for arbitrary complex interactions among CAVs. The CVIP protocol framework enables maneuver coordination among vehicles in a flexible, efficient, and robust manner. In particular, CVIP supports scenarios where two or more participants may jointly negotiate and perform manoeuvers. Accordingly, the interaction between the participating vehicles may comprise a *Negotiation Phase* and an *Execution Phase.* Further, during an *Awareness Phase,* a cooperative awareness may be ensured via the exchange of Cooperative Awareness Messages (CAM) or Basic Safety Message (BSM) beacons. For example, such CAMs/BSMs may be utilized by an initiating vehicle to identify potential maneuver partners. Accordingly, this cooperation awareness is provided already before the *Negotiation Phase* and it may be maintained also during the *Negotiation Phase* as well as during the *Execution Phase.* Further, CVIP provides for status updates by means of Maneuver Status Messages (MSM) so as to enable each participant to monitor the maneuver progress during the *Execution Phase.*

Generally (i.e., also in protocol frameworks other than CVIP), there is a need for implementation schemes that enable monitoring and synchronizing the execution of a cooperative maneuver that has been negotiated among vehicles. It is an object of the present invention to provide a solution for this problem. In particular, the desired solution shall enable implementations that are efficient with regard to both computational complexity and network load.

This object is solved by each of a method, a computing device, a computer program, a computer-readable storage medium, and a data carrier signal according to the independent claims. Preferred embodiments are the subject matter of the dependent claims.

It should be noted that in accordance with some embodiments, certain method steps described in the following may be performed by elements in connected infrastructure (e.g., Road Side Units, edge computing devices, backend servers, quasi stationary elements in fabrication plants, or others). Thus, the elements performing such steps need not necessarily be arranged in a vehicle. For example, the proposed method may involve one or more interactions between infrastructure components and/or interactions between an infrastructure component and one or more vehicles.

According to a first aspect of the invention, a method of coordinating a maneuver among vehicles is presented.

The method comprises: negotiating a maneuver among at least a first vehicle and a second vehicle, wherein the maneuver is specified at least in terms of one or more target road resources attributed to the first vehicle; determining that the first vehicle has entered an area associated with one of the target road resources attributed to the first vehicle and/or determining that the first vehicle has left an area associated with one of the target road resources attributed to the first vehicle; in response to determining that the first vehicle has entered the area associated with the target road resource attributed to the first vehicle and/or in response to determining that the first vehicle has left the area associated with the target road resource attributed to the first vehicle, transmitting a status message from the first vehicle to the second vehicle.

As used in this specification, the term vehicle shall be understood in a broad sense. For example, the term vehicle includes passenger cars, busses, commercial vehicles, transport vehicles, drones, robots, motorboats, ships, agricultural vehicles, railway vehicles, and others.

Further, the term vehicle may refer to (fully or at least partially) automated or non-automated vehicles.

As stated above, in one step of the method, a maneuver is negotiated among at least a first vehicle and a second vehicle.

For example, the first vehicle may be an initiating vehicle (also referred to as host vehicle in the following), which initiates the negotiation of a coordinated or cooperative maneuver. In that case the second vehicle may be referred to as a remote vehicle. In accordance with some embodiments, the method may involve a host vehicle and one or more, such as at least two, remote vehicles. Thus, in principle, the method allows for coordinating a maneuver among arbitrary many participants.

In other embodiments, the first vehicle may be a remote vehicle and the second vehicle may be a host vehicle or another remote vehicle.

The maneuver may comprise a plurality of individual actions and/or sub-maneuvers to be performed by at least one participant, i.e., by the first vehicle and/or the second vehicle.

For example, the maneuver may include at least one of the following: a lane change of a participating vehicle (such as a host vehicle); a participating vehicle (such as a host vehicle) merging into a road via an on-ramp; one or more participating vehicles crossing an intersection in a coordinated manner; a maneuver wherein at least one participating vehicle (such as a host vehicle) avoids a hazard, e.g. by avoiding a collision with an obstacle, such as a vulnerable road user (VRU).

The negotiated maneuver is specified at least in terms of one or more target road resources attributed to the first vehicle. In some embodiments, the maneuver may be further specified at least in terms of one or more target road resources attributed to the second vehicle.

For example, each target road resource may be associated with an area that is reserved for the respective (first or second) vehicle within the negotiated maneuver. Preferably, each target road resource is defined at least in terms of an area information (specifying said reserved area) as well as a time information. The time information may indicate a time slot (i.e., a specific period of time) during which the respective vehicle is supposed to occupy the area according to the negotiated maneuver.

This is to say that, e.g., an area in the form of a specific road space (such as a section of a specific lane, the section having a defined length) may be reserved for a certain time interval as a target road resource of the first or second vehicle. Hence, a target road resource intended to be occupied by the respective vehicle may be defined with both geographical and temporal characteristics.

For example, the time information specifying a target road resource may be expressed in terms of the Coordinated Universal Time (UTC), wherein each participating vehicle may have access to a reference clock that conforms to UTC so as to allow for a synchronized execution of the maneuver.

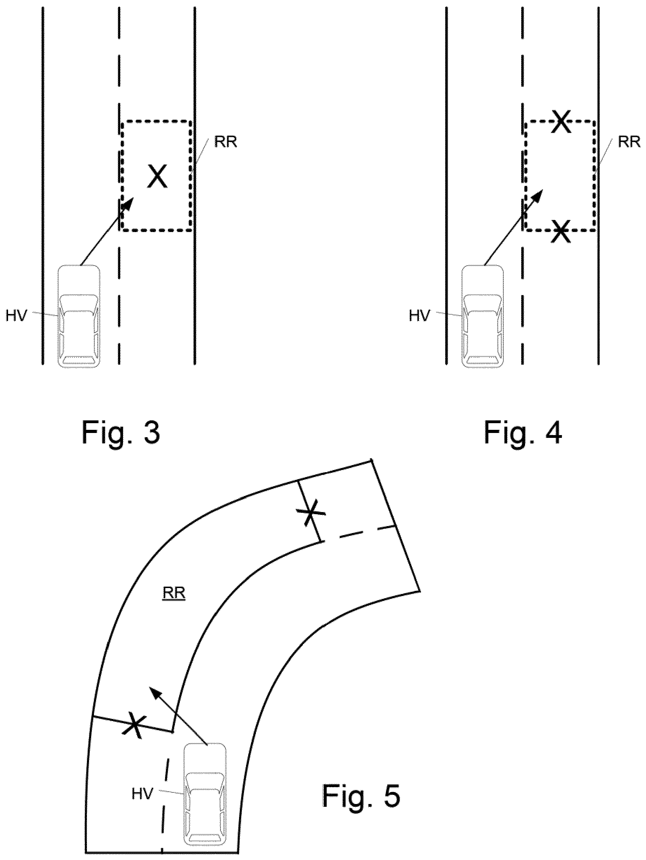

Some examples of how the target road resources may be defined are explained further below in the detailed description of the Figs. 3-9.

In some embodiments, the maneuver may further be specified in terms of one or more current road resources of one or more participating vehicle(s). For example, a current road resource may comprise a current position information and optionally a lane identifier. The current road resource may also include a current time information, such as a time stamp.

Further, the maneuver may additionally be specified in terms of a maneuver type, wherein the maneuver type describes the context of the maneuver, i.e., it allows for a distinction between various maneuver situations, such as lane change or lane merge.

In accordance with some embodiments, said negotiation step of the method presented herein may constitute at least a part of a *Negotiation Phase* of a more comprehensive protocol framework, such as CVIP as described in the article by Häfner *et al.* [14], which is hereby incorporated by reference, or such as the *Maneuver Sharing and Coordinating service (MSCS)* being currently developed by a task force within the SAE [5]. In particular, the maneuver negotiation step of the method presented herein may comprise steps involving a transmission of request and/or response messages as described in one of said documents [5, 14] and/or as described in the international patent application PCT/EP2020/060293, filed on April 9, 2020, which proposes a method related to CVIP, and which is hereby incorporated by reference.

Accordingly, the method presented herein may comprise further steps, which may refer, e.g., to the planning of a cooperative maneuver and/or to exchanging certain request or response message as part of the maneuver negotiation.

In an embodiment, the method may further comprise a step of planning a coordinated maneuver sequence that involves an initiating vehicle and a remote vehicle; and transmitting a request message to the remote vehicle, the request message including information specifying the coordinated maneuver.

For example, the initiating vehicle (or host vehicle) may be the first vehicle and the remote vehicle may be the second vehicle of the method presented herein. Alternatively, for example, the initiating vehicle (or host vehicle) may be the first vehicle and the remote vehicle may be the second vehicle of the method presented herein, or both the first and the second vehicle of the method presented herein may be a remote vehicle.

The request message may comprise a specific proposal for the remote vehicle to execute one or more actions (e.g. sub-maneuvers) within the specified coordinated maneuver. Additionally, the request message may comprise one or more actions the host vehicle is planning to execute within the specified coordinated maneuver sequence. In the context of the method presented herein, the actions may be specified at least in terms of one or more target road resources attributed to the respective vehicle. For example, temporal and/or spatial relations (e.g., concerning respective start or end times and/or reserved road sections) between the participating vehicles may be expressed by means of the target road resource(s) included in the proposal.

For example an individual request message may be sent to each remote vehicle, wherein each remote vehicle may be addressed by means of a respective ID, such as a so-called station ID.

For example the initiating vehicle may issue such a request message after determining a need for a joint maneuver to one or several remote vehicle(s) as potential partner(s).

In accordance with some embodiments the request message may be transmitted directly or indirectly from the initiating vehicle to the remote vehicle(s).

For example, a wireless transmission path for the request message may extend between a transmitter of the initiating vehicle and a receiver of the remote vehicle (in particular, from the transmitter of the initiating vehicle to the receiver of the remote vehicle), wherein optionally one or more intermediate stations, such as base stations etc., may be additionally involved.

In an embodiment, the planning of the coordinated maneuver sequence is triggered or carried out by a computing device of the initiating vehicle. For example, at least some of the data processing involved in the planning may be performed by such a computing device, which may be arranged in the initiating vehicle.

Preferably, the planning of the coordinated maneuver sequence takes into account assumptions (or knowledge) on maneuver capabilities of the remote vehicle, e.g. with regard to its physical capabilities and vehicle dynamics. In other words, the proposed maneuvers may directly reflect assumptions or knowledge of the initiating vehicle about the physical capabilities and vehicle dynamics of other actor(s). For example, this may also refer to certain restrictions of the remote vehicle(s). Such assumptions or knowledge of the initial vehicle may be based, for example, on a protocol-based inquiry of values or status information, which may yield indications of (in)sufficient capacities, or the like. Such information may be conveyed by means of a response scheme explained below, for example.

Further, in accordance with some embodiments, the planning of the coordinated maneuver sequence may take into account current and/or future (predicted) Quality of Service parameters of communication (e.g., regarding latency, jitter, data rate, channel load, packet scheduling, etc.).

For example, the assumptions or the knowledge mentioned above may be based on an environment model and/or based on a prediction model available to the initiating vehicle. Backend information available to the initiating vehicle may also be used as a basis for such assumptions or knowledge.

As regards the contents of the request message, in an embodiment, the request message may further express one or several information needs that the initiating vehicle requests to be fulfilled by the remote vehicle. In other words, in a request message that proposes a coordinated maneuver sequence, information needs that the initiating vehicle wants to be fulfilled by one or several remote vehicles can additionally be expressed. Thus, the method may also enable demand-based information exchanges based on the same set of messages as used for maneuver coordination. Hence, the proposed protocol may combine cooperative perception and cooperative maneuvering.

In an embodiment, the method further comprises the steps of: receiving the request message at the remote vehicle; and evaluating the information included in the request message as to whether the coordinated maneuver sequence is acceptable.

For example, the acceptability of the proposed coordinated maneuver sequence may depend on the feasibility according to the remote vehicle's own environment model or prediction model and/or on a willingness of the remote vehicle as evaluated, e.g., based on the remote vehicle's own path planning and/or driving strategy. Specifically, said evaluation may involve evaluating a cost functional reflecting relevant trajectory planning and/or maneuver planning criteria.

In an embodiment, the evaluation of the information included in the request message is triggered or carried out by a computing device of the remote vehicle. For example, at least some of the data processing involved in the evaluation may be performed by such a computing device, which may be arranged in the remote vehicle.

It is also within the scope of the invention that some data processing involved in the evaluation may be at least partially executed on an external computing device, such as by means of a cloud service and/or a remote server. In this case it may be provided that the evaluation of the information included in the request message is at least triggered (i.e., initiated) by a computing device of the remote vehicle.

As a further step, the method may comprise transmitting a response message to the initiating vehicle.

In accordance with some embodiments the response message may be transmitted directly or indirectly from the remote vehicle to the initiating vehicle.

For example, a wireless transmission path for the response message may thus extend between a transmitter of the remote vehicle and a receiver of the initiating vehicle (in particular, from the transmitter of the remote vehicle to the receiver of the initiating vehicle), wherein optionally one or more intermediate stations, such as base stations etc., may be additionally involved.

The response message indicates (explicitly or implicitly) whether the coordinated maneuver sequence is acceptable for the remote vehicle. Thus, the response message may convey a confirmation or a decline of the proposed coordinated maneuver sequence, the latter possibly in conjunction with a counter-proposal, as described in the following.

In an embodiment, the response message includes a counter-proposal, which proposes a coordinated maneuver sequence that is acceptable for the remote vehicle.

For example, in this case the method may further include a step of planning an adjusted coordinated maneuver sequence that is acceptable for the remote vehicle, wherein said planning may be carried out or triggered by the remote vehicle (such as by means of a computing device of the remote vehicle, which may, for example, implement a so-called cooperation logic).

The combination of the transmitted request(s) and the received response(s) may provide a clear picture to the initiating vehicles regarding the remote vehicles' willingness to participate.

In particular, by providing the response message as part of a protocol for coordinating a maneuver, willing participants of the coordinated maneuver may be determined via the responses received from the remote vehicles. Thus, for example, some known disadvantages [8] related to concepts involving group formation for complex maneuvers [13] may be avoided.

In an embodiment, the method further comprises, in response to the initiating vehicle receiving a response message indicating that the coordinated maneuver sequence is not acceptable for the remote vehicle: planning an adjusted coordinated maneuver sequence that involves the initiating vehicle and said remote vehicle and/or one or several other remote vehicle(s); and transmitting an updated request message (e.g. from the initiating vehicle) to the remote vehicle(s) involved in the adjusted coordinated maneuver sequence, wherein the updated request message includes information specifying the adjusted coordinated maneuver sequence.

Alternatively or additionally, the method may comprise, in response to the initiating vehicle receiving one or more affirmative response messages indicating that the (possibly already adjusted) coordinated maneuver sequence is acceptable for all involved remote vehicles: transmitting a maneuver status message to the involved remote vehicles, the maneuver status message indicating that the coordinated maneuver sequence is planned.

For example, in accordance with some embodiments, it may be provided that an iteration of (possibly updated) request messages and response messages shall be repeated until no changes are proposed and no errors are sent any more. This may be taken as sign for "convergence" of the maneuver coordination.

When convergence is reached, the initiating vehicle may send status message, with the agreed maneuvers, together with a maneuver status as "Planned" for each maneuver. In this way, every participating vehicle can be sure that all other involved vehicles also have agreed to a maneuver.

At this point, a *Negotiation Phase* of the method may be considered completed.

Then, an *Execution Phase* may be entered, in which the participating vehicles are supposed to move appropriately to conform to the agreed maneuver.

In a further step, which may be part of an *Execution Phase* as mentioned above, it is determined that the first vehicle has entered an area associated with one of the target road resources attributed to the first vehicle and/or that the first vehicle has left an area associated with one of the target road resources attributed to the first vehicle. In case there is only one target road resource attributed to the first vehicle, said area is an area associated with the (only) target road resource attributed to the first vehicle.

The determination that the first vehicle has entered and/or left the area associated with the target road resource may be performed, e.g., by means of a localization system of the first vehicle. For example, a computer device arranged in the first vehicle may be configured to receive data from one or more environment perception sensors which are configured for detecting objects in an environment of the first vehicle. Based on these data and/or based on navigation data (such as GPS data), possibly in combination with map information (which may be provided, for example, by a map data storage unit), the computing device may determine a location of the vehicle relative to said area.

For example, in the context of said determination step of the method presented herein, it may be determined that the first vehicle has entered/left the area when the *entire* first vehicle has entered/left the area. Alternatively, it may be determined that the first vehicle has entered/left the area in the sense of the method presented herein when a specific part or portion of the first vehicle has entered/left the area.

A further step of the method presented herein provides that in response to determining that the first vehicle has entered the area associated with the target road resource attributed to the first vehicle and/or in response to determining that the first vehicle has left the area associated with the target road resource attributed to the first vehicle, a status message is transmitted from the first vehicle to the second vehicle. The status message may also be referred to as a Maneuver Status Message (MSM).

For example, a wireless transmission path for the status message may extend between a transmitter of the first vehicle and a receiver of the second vehicle (in particular, from the transmitter of the first vehicle to the receiver of the second vehicle), wherein optionally one or more intermediate stations, such as base stations etc., may be additionally involved.

In an embodiment, the status message comprises an identifier of the respective target road resource (an associated area of which has been entered or left), preferably in combination with status information indicating whether the respective are has been entered or left.

For example, when the area associated with the target road resource has been entered, the status message that is transmitted may comprise a target road resource ID together with the status indication INPROGRESS, ENTERED, or the like. When the area associated with the target road resource has been left, another status message may be transmitted, which includes the road resource ID together with the status indication FINISHED, LEFT, or the like.

For example, once the respective status for all target road resources of the coordinated maneuver has been set to FINISHED (or LEFT), the joint maneuver can be considered completed.

Further, in an embodiment, the status message may comprise one or more of the following items: a message ID; a time stamp; an ID of the sending vehicle; a Maneuver Instance ID indicating which maneuver the status message refers to (in case more than one maneuvers have been negotiated).

For example, the status message may be transmitted from the first vehicle to the second vehicle immediately (i.e., without any deliberate delay) when it has been determined that the first vehicle has entered the area associated with target road resource and/or immediately when it has been determined that the first vehicle has left the area associated with the target road resource. In other words, the transmission of the status message may be triggered as soon as the respective event (entering/leaving the area) has been detected.

Further, in an embodiment, a status message is transmitted from the first vehicle to the second vehicle every time it has been determined that the first vehicle has entered an area associated with a target road resource attributed to the first vehicle and/or every time it has been determined that the first vehicle has left an area associated with a target road resource attributed to the first vehicle. In other words, it may be provided that a status message is transmitted whenever the first vehicle enters such an area and/or whenever the first vehicle leaves such an area.

It is also within the scope of the present invention that the method may further comprise: determining that the second vehicle has entered an area associated with one of the target road resources attributed to the second vehicle and/or determining that the second vehicle has left an area associated with one of the target road resources attributed to the second vehicle; and in response to determining that the second vehicle has entered the area associated with the target road resource attributed to the second vehicle and/or in response to determining that the second vehicle has left the area associated with the target road resource attributed to the second vehicle, transmitting a status message from the second vehicle to the first vehicle. In other words, a transmission of status messages may be performed not only in the direction from the first vehicle to the second vehicle, but also in the reverse direction.

In accordance with some embodiments, the variant embodiments described above and in the following in connection with a status message transmitted from the first vehicle to the second vehicle may apply analogously to the transmission of a status message from the second vehicle to the first vehicle.

Further, in an embodiment, status messages shall be transmitted whenever (and preferably as soon as) a vehicle participating in the maneuver enters or leaves an area associated with a target road resource that is attributed to the vehicle. Thus, the status messages may function as a status update for the other involved vehicles and may indicate that the maneuver is still on-going.

For example, via such status messages, all involved vehicles may always know a current execution status of each participating actor.

In an embodiment, the method further comprises: determining, based on information conveyed with the status message (including, e.g., the time when it has been transmitted) whether the first vehicle uses the respective target road resource according to the negotiated maneuver. For example, this determination may be performed at least partially by means of a computing device of the second vehicle. For example, it may be determined whether a point in time when the first vehicle has entered or left the area associated with the target road resource assigned to itself conforms with the agreed maneuver, e.g., in the sense that the first vehicle is present in said area during a time period associated with said area according to a definition of the target road resource.

In an embodiment, the method may further comprise: reevaluating, based on information conveyed with the status message transmitted from the first vehicle to the second vehicle, the (further) participation of the second vehicle in the negotiated maneuver. For example, this reevaluation may be performed at least partially by means of a computing device of the second vehicle. For example, the reevaluation may refer to a willingness or capability of the second vehicle for further participation in the maneuver, in particular in view of possible deviations of the first vehicle from the negotiated maneuver, which may become apparent based on the information conveyed with the status message. For example, the reevaluation may be carried out by means of an evaluation of a cost functional.

In an embodiment, the method comprises: determining, based on information conveyed with the status message sent from the first vehicle to the second vehicle, a deviation between the first vehicle's use of the respective target road resource and the negotiated maneuver; and in response to determining said deviation, transmitting, from the second vehicle to the first vehicle at least one of the following: a cancellation message for one or more target road resources attributed to the second vehicle; one or more alternative target road resources for the first vehicle and/or for the second vehicle. For example, if a computing device of the second vehicle detects a deviation from the planned maneuver (e.g. by determining through the status message that the first vehicle has entered/left the area associated with the target road resource too early/too late as compared to the agreed maneuver) it may request cancellation of the maneuver and/or propose one or more alternative target road resources which may constitute a modified maneuver.

If no deviation is detected or if an evaluation on the part of the second vehicle yields that the maneuver can be continued even taking into account a detected deviation, the maneuver may be further executed as planned.

More generally, in some embodiments, it may be provided that every participating vehicle (e.g., the initiating vehicle and the remote vehicle(s)) may cancel their participation in the coordinated maneuver by means of one or more status message(s) indicating the status value "canceled" (or the like) for the target resources that are assigned to the vehicle. In a variant, it may be provided that a remote vehicle can send a corresponding cancellation request to the initiating vehicle, whereupon the initiating vehicle may confirm this request and thus cancel the maneuver.

It is preferred that the reception of the status message is confirmed by means of a feedback message to ensure that every participating vehicle knows about the current status.

Optionally, a suitable resend scheme may be implemented for the status messages so as to make sure that every status message reaches every participating actor (other than the sender of the status message). Such a resend scheme has been described by Häfner *et al.* [14], for example.

In an embodiment, the method comprises transmitting a feedback message in response to receiving a status message. The feedback message may be transmitted from the receiving end of the status message, i.e., by the first vehicle or the second vehicle, to the sending end of the status message.

In some embodiments, all feedback messages may be sent to all the other participating vehicles. Alternatively, it may be provided, for example, that feedback messages shall be sent at least to the sending vehicle of the to-be-confirmed status message (and optionally also to some or all of the other participating vehicles).

The feedback message may serve as an acknowledgment to make sure the state transition (i.e., entering or leaving a target road resource) has been received by the other participants.

In some embodiments, the feedback message (which may also be referred to as maneuver feedback message - MFM) may be a simple ACK for confirming reception of the status message. For example, such an ACK message may be triggered by the application layer or by a lower layer of a communication protocol used for a V2V communication between the participating vehicles.

Alternatively, the feedback message may be configured as what may be referred to as an "extended ACK". For example, the feedback message may repeat at least a part of the content of the received status message. Accordingly, the feedback message may comprise, e.g., a Maneuver Instance ID, a message ID of the MSM, and/or a status of execution as received in the MSM. For example, such a feedback message may be triggered by the application layer or by a lower layer of a communication protocol used for a V2V communication between the participating vehicles.

Accordingly, in some embodiments, it may be provided that the feedback message repeats the content of the received status message. Thus, it may be ensured that all participating vehicles have a synchronized status of all involved vehicle's execution states. In this way, for example, conflicts may be recognized and consistency may be ensured in case of transmission errors. In particular, this provides an efficient mechanism to prevent diverging internal execution states across actors, for example due to messages not received. It should be noted that functionally this goes beyond sending a simple ACK message.

In a variant embodiment, it may be provided that the status message comprises status information not only with regard to one or more target road resources assigned to the vehicle that sends the status message, but also with regard to (preferably all) target road resources assigned to other vehicles participating in the maneuver. In other words, the status message may also reflect a current knowledge (or assumptions) of the sending vehicle on the execution status with regard to the target road resources of (preferably all) other participating vehicles.

Further, it may be provided that the feedback message sent by a vehicle in response to a status message reflects the current knowledge (or assumptions) of that vehicle on the execution status with regard to the target road resources of (preferably all) other participating vehicles. This may yield an agreement with or a deviation from the current knowledge (or assumptions) of the vehicle that has transmitted the status message.

For example, a combination of such a status messages and of such a feedback message may be used for implementing a scheme, wherein vehicle can actively ask for clarifications, e.g., if it detects a deviation of other vehicles from the agreed maneuver. In such a case, a first vehicle may send a status message indicating a status which reflects a current knowledge (or assumption) of the first vehicle about a current execution status regarding one or more target road resources of at least a second vehicle (and preferably of all other vehicles, too). The second vehicle may respond with a feedback message representing its own current knowledge (or assumptions). The first vehicle may analyze the feedback message and detect possible deviations.

In accordance with some embodiments, the method steps involving transmission(s) of one or more status messages and/or feedback messages presented herein may constitute at least a part of an *Execution Phase* of a more comprehensive protocol framework, such as CVIP as described in the article by Häfner *et al.* [14], or such as the *Maneuver Sharing and Coordinating service (MSCS)* being currently developed by a task force within the SAE [5]. For example, the status messages and/or feedback messages presented herein may be specific instances of status messages and/or feedback messages as described in [14] and/or as described in the international patent application PCT/EP2020/060293, filed on April 9, 2020, which proposes a method related to CVIP.

The embodiments described above and in the following include the recognition that it may be beneficial to provide for maneuver status messages as a "check and control" mechanism during an executing phase of a coordinated maneuver. In particular in the case of a complex maneuver with many participating vehicles, this may increase the safety, since the vehicles can thus be mutually assured that everyone still follows the original maneuver plan, or react to deviations in case one or more vehicles do not conform to the negotiated maneuver.

In accordance with some embodiments, it may be provided that whenever a vehicle enters or leaves an area associated with a target road resource that was attributed to (reserved for) that vehicle within a negotiated maneuver, it sends a Maneuver Status Message (MSM) indicating this to the other vehicles participating in the maneuver. For example, the MSM may contain at least the sending vehicle's ID, a Maneuver Instance ID, a message ID, an ID of the target road resource, and a status indication as to whether the area is entered or left. For example, possible status indications referring to a specific target road resource are "Reserved," "Entered," "Left," and "Cancelled" (see below for details on cancellation).

Further, in accordance with some embodiments, it may be provided that the other vehicles participating in the maneuver shall confirm reception of the MSM with a Maneuver Feedback Message (MFM) sent to the vehicle that transmitted the MSM. For example, the MFM may be an extended ACK, containing, e.g., the Maneuver Instance ID, the message ID of the MSM, and the status of execution as received in the MSM. This may apply in particular if the MFM is a message triggered by an application layer of a communication protocol used for the communication between the vehicles. In implementation variants where the MFM is not a message triggered by the application layer, the contents of the MFM may be different. For example, the MFM may take the form of a simple ACK, in particular, if the MFM is a message triggered by a layer lower than the application layer.

In accordance with some embodiments, the following procedure may be provided in case any participating vehicle needs to cancel the cooperative maneuver during the maneuver execution phase: Any participating vehicle can cancel usage of one or more target road resource(s) assigned to itself at any time, by sending an MSM indicating "cancelled" (or the like) as the status for the respective target road resource(s). The vehicle can optionally transmit one or more alternative target road resource(s) which it intends to use instead, under the condition that they have not been reserved for any other participant in the maneuver. Preferably, the vehicle shall avoid using target road resource(s) reserved by other participants in the cooperative maneuver, even after such a cancellation.

Participation in a maneuver as a whole may be cancelled by sending an MSM containing all target road resources reserved for the vehicle with statuses "cancelled" (or the like). Also in this case, the vehicle can send an alternative set of target road resources to the other participating vehicles.

The other vehicles, when receiving an MSM containing one or more cancelled target road resource(s), shall treat it as a normal MSM, namely, they shall send an MFM in response. The latter vehicles (i.e. the other participating vehicles) may re-evaluate their further participation in the maneuver given the (partial or complete) cancellation of the target road resources by the former vehicle.

Further, in accordance with some embodiments, it may be provided that when a vehicle has sent out an MSM indicating that it has left the last target road resource assigned to it for the current maneuver, it shall consider the maneuver as completed and go back to an awareness state (which may also be referred to as pre-awareness state), in which it is ready for taking up a new maneuver negotiation.

Receiving an MFM (in response to an MSM) from such a vehicle that has indicated that it has left the last target road resource assigned to it may be deemed optional for the remaining participants of the maneuver. For the last two vehicles in a cooperative maneuver, this means that after having received an MSM indicating that one of the vehicles has left its last target road resource, the other vehicle may or may not send out the remaining MSMs indicating entering/leaving of target road resources.

Further, in accordance with some embodiments, it may be provided that when the granted maneuver is completely executed, i.e., when it has been indicated the last target road resource has been left, all participating vehicles go back to the pre-awareness state.

The embodiments described above and in the following include the recognition that the solution proposed herein may be implemented beneficially in that it allows for a good balance between necessary computational complexity and network resource usage.

In this context, it should be noted that a first possible alternative solution for the problem of state synchronization during the execution phase of a coordinated maneuver relies on periodic beacons, which are sent out by the participating vehicles. For example, the beacons may carry status information such as "Maneuver is still executed" or "Execution as planned". This alternative solution has the advantage that it uses a very simply logic for transmission (namely, periodic transmission), corresponding to a low computational complexity. However, since many transmissions without updates will occur, this solution is not optimal in terms of network load. In addition, it is unclear how optimal transmission intervals should be designed, e.g. static or dynamic.

A second alternative solution provides for the possibility for a participating vehicle to actively ask other participating vehicles for their respective execution state. For example, such an implementation could synchronize execution states via requesting clarification whenever a deviation to the expected behavior is identified. This solution is beneficial in terms of network load reduction, since status messages are sent only when they are actually required, namely, when an execution state becomes unclear to at least one participating vehicle. However, the computational complexity is high, since the logic needed for judging deviations is considerably more complex than, for example, sending periodic status messages.

By contrast, the solution presented herein, which is based on maneuver status messages that are transmitted at state transitions defined by entering or exiting road resources, finds a feasible compromise between the a priori conflicting design goals of keeping both the network load and the computational complexity as low as possible: The logic needed to determine when to send the status messages (namely, at said state transitions) is considerably less complex than the one needed for judging deviations, which is required for the second alternative solution mentioned above. At the same time, the usage of network resources is considerably lower as compared to the first alternative solution, which is based on periodic beacons.

According to a second aspect of the invention, a computing device is configured for: generating and/or receiving information specifying a maneuver that has been negotiated (at least) among a first vehicle and a second vehicle, wherein the maneuver is specified at least in terms of one or more target road resources attributed to the first vehicle; determining that the first vehicle has entered an area associated with one of the target road resources attributed to the first vehicle and/or determining that the first vehicle has left an area associated with one of the target road resources attributed to the first vehicle; in response to determining that the first vehicle has entered the area associated with the target road resource attributed to the first vehicle and/or in response to determining that the first vehicle has left the area associated with the target road resource attributed to the first vehicle, generating a status message to be transmitted to the second vehicle.

In some embodiments, the status message is not necessarily addressed individually to the second vehicle (i.e., unicast). Instead, the status message may also be groupcast or broadcast.

For example, generating the information specifying the maneuver may comprise planning and/or negotiating the maneuver, as described above in connection with embodiments of the first aspect of the invention.

It should be understood that the computing device may also be configured for storing the generated or received information specifying the maneuver.

For example, the computing device may be configured for receiving and evaluating one or more sensor signals in connection with GPS signals and/or map information for determining that the first vehicle has entered or left said area.

In accordance with some embodiments, the computing device according to the second aspect may be configured for executing some or all of the steps of the method according to the first aspect as described above, in particular, insofar as steps that are carried out at or on behalf of the first vehicle and/or the second vehicle are concerned. Hence, the explanations and descriptions of embodiments of the method according to the first aspect, which are given above and in the following, may analogously apply to embodiments of the computing device according to the second aspect - and vice versa.

Accordingly, in some embodiments, such a computing device may be arranged in the first vehicle or in the second vehicle. In other embodiments, the computing device may be arranged external of the first vehicle and the second vehicle, such as at a backend.

For example, a vehicle being equipped with such a computing device (or having access to such a computing device in case it is arranged external of the vehicle) may function as a first vehicle as well as a second vehicle within the method of the first aspect of the invention.

In a third aspect, a computer program comprises instructions which, when the program is executed by a computing device, cause the computing device to carry out the steps as specified above.

In a fourth aspect, a computer-readable storage medium comprises instructions which, when executed by a computing device, cause the computing device to carry out the steps as specified above.

A fifth aspect refers to a data carrier signal carrying the computer program according to the fourth aspect.

A sixth aspect of the invention, which may form the basis of one or more divisional applications or subsequent applications, is a method of coordinating a maneuver among vehicles, wherein the method comprises:
- negotiating a maneuver among at least a first vehicle and a second vehicle, wherein the maneuver is specified at least in terms of one or more target road resources attributed to the second vehicle;
- transmitting a status request message from the first vehicle to the second vehicle, wherein the status request message comprises one or more status indications referring to an execution state (e.g. in the form "ENTERED" or "LEFT") of one or more of the target road resources attributed to the second vehicle, the status indication(s) included in the status request message reflecting the execution status as currently known to (/perceived by/assumed by) the first vehicle; and
- transmitting a status response message from the second vehicle to the first vehicle, wherein the status response message comprises one or more status indications referring to an execution state (e.g. in the form "ENTERED" or "LEFT") of said at least one of the target road resources attributed to the second vehicle, the status indication(s) included in the status response message reflecting the execution status as currently known to the second vehicle.

For example, the status request message may be configured as a status message (MSM) in accordance with embodiments of the first aspect of the invention. Further, the status response message may be configured as a feedback message (MFM) in accordance with embodiments of the first aspect of the invention. Hence, what has been explained above and in the following in connection with properties of the response message and/or the feedback message according to the first aspect of the invention may analogously apply to the status request message / the status response message according to the sixth aspect of the invention.

It should, however, be noted that a method according to the sixths aspect need not necessarily implement all features of the method according to the first aspect. For example, within a method according to the sixths aspect, a status message need not necessarily be transmitted automatically when (let alone every time when) a vehicle enters/leaves an area associated with a target road resource assigned to that vehicle.

In an embodiment, the status request message and/or the status feedback message may also refer to execution states of one or more target road resources that are attributed to the first vehicle within the negotiated maneuver.

Further, in a preferred embodiment, the status request message and the status feedback message each comprise status indications referring to respective execution states of all target road resources involved in the negotiated maneuver.

In an embodiment, all vehicles participating in the negotiated maneuver may exchange status information via such combinations of a status request message (e.g., in the form of an MSM) and a status feedback message (e.g., in the form of an MFM).

Similarly to what has been explained in the above (and what will be further explained in the detailed description with reference to the Figures below) in the context of some embodiments of the method according to the first aspect of the invention, the method according to the sixth aspect may enable a scheme wherein a first vehicle participating in a cooperative maneuver actively requests a status clarification from a second vehicle participating in the maneuver, e.g., in case the first vehicle has detected an apparent deviation of the second vehicle from the maneuver as negotiated. In such a case the first vehicle may send a status request message representing its own current knowledge (or assumptions) on execution states. The second vehicle may respond with a feedback message representing its own current knowledge (or assumptions) on execution states. For example, the first vehicle may then analyze the status feedback message by comparing the status information as known to (/assumed by/perceived by) the first vehicle and the status information as known (/assumed by/perceived by) the second vehicle. Thus, for example, the apparent deviation may be confirmed (or not) by means of the status feedback message.

For example, such a deviation may have been detected at least in part based on a status message the first vehicle has previously received from the second vehicle or from another participating vehicle.

Accordingly, for example, a method according to the sixth aspect may form the basis of implementing a scheme corresponding to the "second alternative solution" mentioned above, which provides for the possibility for a participating vehicle to actively ask other participating vehicles for their respective execution state. As mentioned, such a solution may have certain advantages in terms of network load reduction.

Those skilled in the art will recognize additional features and advantages upon reading the following detailed description, and upon viewing the accompanying drawings.

Reference will now be made in detail to various embodiments, one or more examples of which are illustrated in the figures. Each example is provided by way of explanation, and is not meant as a limitation of the invention. For example, features illustrated or described as part of one embodiment can be used on or in conjunction with other embodiments to yield yet a further embodiment. It is intended that the present invention includes such modifications and variations. The examples are described using specific language which should not be construed as limiting the scope of the appended claims. The drawings are not scaled and are for illustrative purposes only. For clarity, the same elements or method steps have been designated by the same references in the different drawings if not stated otherwise.
- Fig. 1: is a schematic and exemplary use case illustration for a lane change scenario.
- Fig. 2: is a schematic and exemplary use case illustration for another lane change scenario.
- Figs. 3-9: each schematically and exemplarily illustrate a definition of a target road resource.
- Fig. 10: schematically and exemplarily illustrates a sequence of method steps in accordance with one or more embodiments.
- Fig. 11: schematically and exemplarily illustrates a message flow between a host vehicle and several remote vehicles in accordance with one or more embodiments.

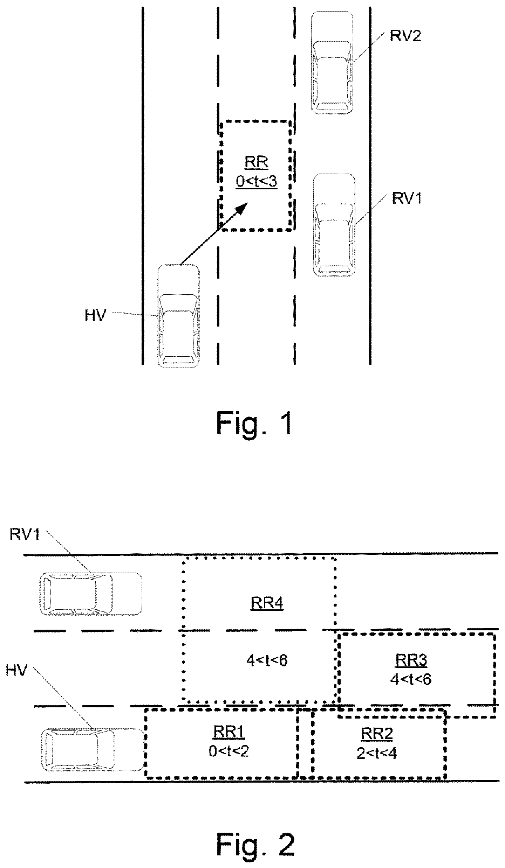

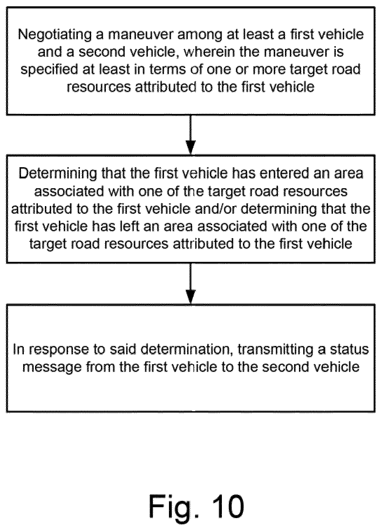

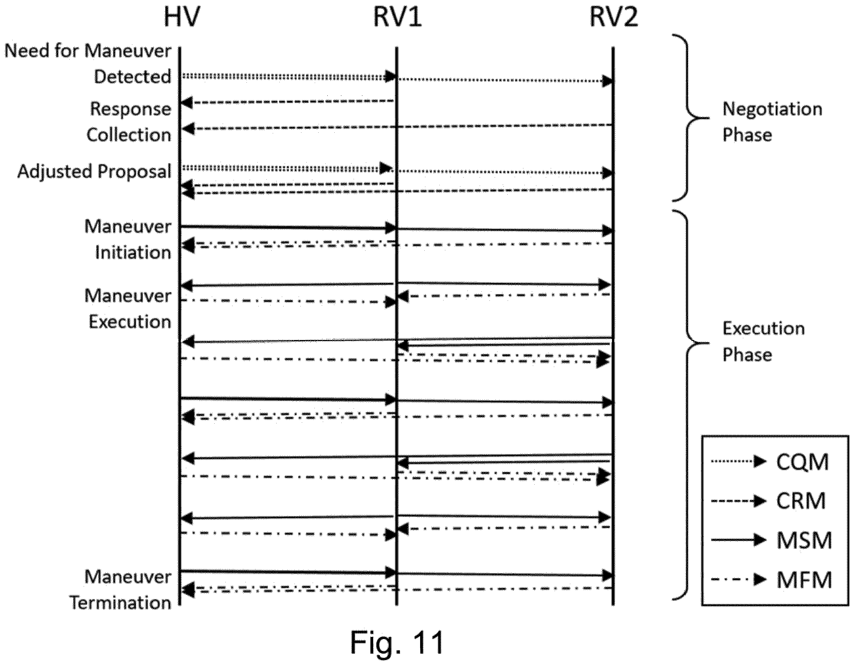

Figs. 1 and 2 each schematically illustrate a respective lane change scenario as an exemplary use case of a method presented herein. In the following, the method will be explained in the context of these exemplary scenarios, wherein reference will be also made to the steps illustrated in Figs. 10 and 11.

In the exemplary scenario shown in Fig. 1, a host vehicle HV initially drives on the leftmost lane of a three-lane road and intends to switch to the middle lane. Two remote vehicles RV1, RV2 drive on the rightmost lane.

In the exemplary scenario shown in Fig. 2, a host vehicle HV initially drives on rightmost lane of a three-lane road and intends to switch to the middle lane while a remote vehicle RV1 drives on the leftmost lane.

It is assumed that all three vehicles HV, RV1, RV2 are CAVs.

At the start of both exemplary scenarios, all vehicles HV, RV1, RV2, are in an awareness state (which may also be referred to as pre-awareness state), in which they may receive Cooperative Awareness Message (CAM) or Basic Safety Message (BSM) beacons, for example. Using such beacons and/or information acquired by means of environment perception sensors, the host vehicle HV may identify the respective remote vehicles RV1, RV2 as relevant maneuver partners for its intended lane change.

The host HV plans the lane change maneuver in terms of one or more target road resources RR, RR1, RR2, RR3 assigned to itself.

Each target road resource RR, RR1, RR2, RR3 is specified in terms of an area information indicating an area that the host vehicle HV intends to occupy (see dashed rectangles in Figs. 1-2) and a time information indicating a time period for which the host vehicle HV wishes to reserve this area.

For example, in the scenario of Fig. 1, the time slot associated with the target road resource RR is the interval between 0 and 3 seconds counting from a reference time known to all participants, such as a starting time of the maneuver (e.g., in terms of a synchronized time used by all participating vehicles HV, RV1, RV2). In this context, further (alternative) possible reference times may be a transmission time of a request message (CQM) initiating the maneuver (see below), or a transmission of a message (such as a first maneuver status message (MSM), see below) transmitted by the initiating vehicle, wherein this message indicates that the (successfully) negotiated maneuver is planned. Such a message may also be referred to as a reservation message (RVM). For example, such a reservation message may mark the beginning of an *Execution Phase* of the cooperative maneuver.

In the example of Fig. 2, the maneuver planned by the host vehicle HV includes three road resources RR1, RR2, RR2 assigned to the host vehicle HV as well as a target road resource RR4 assigned to the remote vehicle RV1 (see dotted rectangle in Fig. 2).

Next, the host vehicle HV negotiates the planned maneuver with the respective remote vehicles RV1, RV2 (see first block in the flow diagram of Fig. 10). The negotiation may be performed during a *Negotiation Phase* of the protocol, as illustrated in Fig. 11.

For example, in accordance with Fig. 11, the host vehicle HV may transmit a request message CQM to the remote vehicles RV1, RV2 to start the *Negotiation Phase.* The request message may also be referred to as *Cooperative Request Message (CQM).* The CQM specifies the intended lane change maneuver in terms of the respective target road resources RR1, RR2, RR3.

Each of the remote vehicles RV1, RV2 receives the CQM and evaluates the information included therein as to whether the proposed maneuver is acceptable.

In a further step, each of the remote vehicles RV1, RV2 transmits a response message CRM to the host vehicle HV (see Fig. 11). The response message CRM indicates whether the coordinated maneuver sequence is acceptable for the remote vehicle. The response message may also be referred to as a *Cooperative Response Message (CRM).*

Optionally, the CRM may include a counter-proposal indicating a modified maneuver that would be acceptable for the respective remote vehicle R1, R2. The host vehicle HV may then update the maneuver proposal according to this feedback and send a new CQM involving an adjusted proposal, as illustrated in Fig. 11.

This iteration of CQMs and CRMs may be repeated until no changes are proposed and no errors are sent any more. This is the sign for convergence and every participating vehicle HV, RV1, RV2 can be sure that all others also have agreed to a maneuver. When such a convergence is reached, the *Negotiation Phase* ends.

Subsequently, an *Execution Phase* may be entered, e.g., by the host vehicle HV transmitting a status message MSM, which indicates that the negotiated maneuver is "planned". The status message may also be referred to as a *Maneuver Status Message (MSM).* For example, as mentioned above, such a first status message MSM may also be referred to as a reservation message RVM in accordance with some embodiments.

More generally, as schematically illustrated in Fig. 11, one or more status messages MSM may be transmitted between the vehicles HV, RV1, RV2 involved in the coordinated maneuver during the *Execution Phase.* Each MSM may indicate to the respective receiving end a respective status of the maneuver at the sending end. In particular, each MSM may contain status indications referring to a specific target road resource, such as "Reserved," "Entered," "Left," and "Cancelled", or the like.

In a variant, the MSM includes such status indications not only with respect to target road resources assigned to the vehicle sending the MSM, but also with respect to (preferably all) target road resources assigned to (preferably all) other vehicles participating in the maneuver. The MSM may thus reflect the current knowledge (or assumptions) of the vehicle sending the MSM on the execution state of all target road resources involved in the maneuver.

Further, it may be provided that each vehicle HV, RV1, RV2 participating in the coordinated maneuver transmits an MSM whenever (and preferably as soon as) it enters or leaves an area associated with a target road resource RR, RR1, RR2, RR3 that is assigned to the respective vehicle HV, RV1, RV2.

For example, referring to the scenarios of Figs. 1-2, at some point during the *Execution Phase,* the host vehicle HV determines that it has entered (or left) an area marked with the dashed rectangle, which is associated with one of the target road resources RR, RR1, RR2, RR3. (This step corresponds to the second block of the flow diagram in Fig. 10.)

In response to such a determination, the host vehicle HV transmits a status message MSM to the respective remote vehicle(s) RV1, RV2, wherein the MSM identifies the respective target road resource RR, RR1, RR2, RR3 and indicates the corresponding status "Entered" (or "Left"). (This step corresponds to the third block of the flow diagram in Fig. 10.)

Likewise, in the scenario of Fig. 2, the remote vehicle RV1 may also transmit an MSM with a status indication "Entered" (or "Left") to the host vehicle HV in response to determining that the remote vehicle RV1 has entered (or left) the area marked with the dotted rectangle, which is associated with the target road resource RR4.

In order to inform the sender of the MSM that all participating vehicles HV, RV1, RV2 have received the MSM and to make sure all participants' internal state directories are synchronized, a feedback message MFM may be transmitted from the receiving end of an MSM to the sending end of an MSM as an acknowledgement. Such a feedback message may also be referred to as a *Maneuver Feedback Message (MFM).*

For example, the MFM may repeat at least a part of (or all of) the content of the MSM just received.

Additionally or alternatively, it may be provided that an MFM sent by a vehicle HV, RV1, RV2 in response to a MSM reflects the current knowledge (or assumptions) of that vehicle HV, RV1, RV2 on the execution status with regard to the target road resources RR1, RR4, RR3, RR4 of (preferably all) other participating vehicles HV, RV1, RV2.

For example, the remote vehicle RV1 in the scenario of Fig. 2 can actively ask for clarifications by means of an MSM, e.g., if it detects a possible deviation of the host vehicle HV from the agreed maneuver. For example, at time t=5 (seconds), the remote vehicle RV1 may send an MSM indicating the status "entered" for its own target road resource RR4 and the status "entered" for the host vehicle's HV target road resource RR2. This may correspond to a situation where the remote vehicle RV1 assumes (e.g. based on data provided by its own environment perception sensors) that the host vehicle HV might have deviated from the agreed maneuver in that it is still in the area associated with the target road resource RR2 at t=5, whereas it should already be in the area associated with the target road resource RR3 according to the agreed maneuver.

The host vehicle HV may respond to this request for clarification with an MFM reflecting its own current knowledge. For example, it can confirm the status indications as contained in the MSM of the remote vehicle RV1. Alternatively it may "correct" the remote vehicle's RV1 assumption by including in the MFM the status "entered" for its target road resource RR3 and "left" for its target road resource RR2.

Accordingly, the MSM and the MFM may be used by each vehicle HV, RV1, RV2 participating in the maneuver to determine, based on information conveyed with the MSM and/or with the MFM, whether another participating vehicle HV, RV1, RV2 uses the respective target road resources RR1, RR2, RR3 according to the negotiated maneuver.

For example, each vehicle HV, RV1, RV2 having received an MSM and/or an MFM may (re)evaluate its own further participation in the maneuver based on information conveyed with the MSM and/or the MFM.

For example, based on information conveyed with an MSM sent from the host vehicle HV to the remote vehicle RV1 and/or a based in information conveyed with an MFM sent from the host vehicle HV to the remote vehicle RV1, the remote vehicle RV1 in the scenario of Fig. 2 may determine a deviation between the first vehicle's HV use of one of the target road resources RR1, RR2, RR3 and the negotiated maneuver. In response to such a determination, the remote vehicle RV1 may transmit a cancellation message for its own target road resource RR4 if an evaluation yields that the further participation of the remote vehicle RV1 in the maneuver is not feasible or not acceptable under the changed conditions (i.e., taking into account the deviation of the host vehicle HV from the agreed maneuver). Additionally or alternatively, the remote vehicle RV1 may also send one or more alternative target road resources for the host vehicle HV and/or for the remote vehicle RV1 as a proposal to modify the maneuver.

The joint maneuver may be considered terminated (see Fig. 11) once a corresponding status indication has been set to "Left" for all target road resources RR1, RR2, RR3, RR4 involved in the maneuver.

Figs. 3-9 each schematically and exemplarily illustrate a possible way to define a target road resource RR. In each case, the target road resource RR is defined in terms of certain geographical characteristics and in terms of certain temporal characteristics.

With regard to the temporal characteristics, the target road resource RR may in each case be defined by means of a start time indicating when the aforementioned space may be occupied and an end time indicating when the space must be vacated, wherein the time may be counted with respect to a maneuver start time, for example.

With regard to geographical characteristics, different variants are conceivable:
For example, in accordance with Fig. 3, an area associated with the target road resource RR may exhibit the shape of a straight box with defined width, length, and height. The location of this area may be defined by a center position, as indicated with an "X" in Fig. 3. For example, the center position may be specified by a GNSS position (latitude, longitude and elevation), i.e., by an absolute position. Alternatively, the center position can be specified with lateral, longitudinal and elevation displacement with respect to a current position (or a current road resource) of the vehicle, i.e., as a relative position. Further, a lane identifier may be used to define the target road resource RR.

In accordance with Figs. 4 and 5, an area associated with the target road resource RR may exhibit the shape of a straight or curved box with a defined width (e.g., corresponding approximately to a lane width). Longitudinally, the location of the target road resource is defined by respective center positions of two sides of the box (marked with "X"). For example, the center position may be specified by a GNSS position (latitude, longitude and elevation), i.e., by an absolute position. Alternatively, the center position can be specified with lateral, longitudinal and elevation displacement with respect to a current position (or a current road resource) of the vehicle, i.e., as a relative position. Further, a lane identifier may be used to define the target road resource RR.

It should be noted that target road resources RR, such as the ones described above with reference to Figs. 3-5, may also be defined as moving target road resources RR.

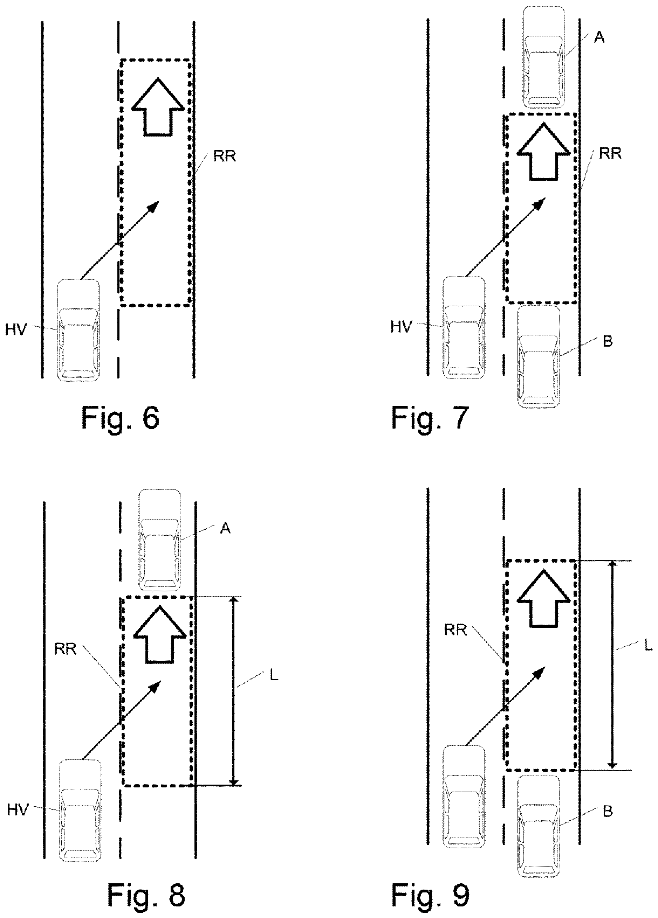

This is exemplarily illustrated in each of Figs. 6-9, wherein an arrow symbolizes a movement of the respective areas defining the target toad resource RR.

For example, in accordance with Fig. 6, an anchor time and an area movement speed may further define the geographical characteristics of the target road resource RR.

Figs. 7-9 illustrate that the geographical characteristics of target road resources RR may also be defined by means of one or two (potentially moving) vehicles A, B.

For example, in accordance with Fig. 7, the box shape may be defined by descriptions of two vehicles A, B at each end of the box. If a vehicle A, B is present only at one end of the box, a length value L may be used to define a length of the box, as illustrated in Figs. 8-9. Even if the area is box-shaped in all of Figs. 6-9, the same definition principles may also be applied to curved boxes similar to the one shown in Fig. 5.

### References

[1] K. Sjöberg, P. Andres, T. Buburuzan, and A. Brakemeier, "Cooperative Intelligent Transport Systems in Europe: Current Deployment Status and Outlook," IEEE Vehicular Technology Magazine, vol. 12, no. 2, pp. 89- 97, 2017.
[2] L. Chen and C. Englund, "Cooperative Intersection Management: A Survey," IEEE Transactions on Intelligent Transportation Systems, vol. 17, no. 2, pp. 570-586, 2016.
[3] J. Rios-Torres and A. A. Malikopoulos, "A Survey on the Coordination of Connected and Automated Vehicles at Intersections and Merging at Highway On-Ramps," IEEE Transactions on Intelligent Transportation Systems, vol. 18, no. 5, pp. 1066-1077, 2017.
*[4]* Intelligent Transport Systems (ITS); Vehicular Communication; Informative Report for the Maneuver Coordination Service, ETSI TR 103 578 V0.0.4 (2019-11), (Draft).
[5] Application Protocol and Requirements for Maneuver Sharing and Coordinating Service, SAE J3186 (Draft).
[6] L. Hobert, A. Festag, I. Llatser, L. Altomare, F. Visintainer, and A. Kovacs, "Enhancements of V2X Communication in Support of Cooperative Autonomous Driving," IEEE Communications Magazine, vol. 53, no. 12, pp. 64-70, 2015.
[7] C. Bürger, P. F. Orzechowski, O. S. Tas, and C. Stiller, "Rating Cooperative Driving: A Scheme for Behavior Assessment," in IEEE International Conference on Intelligent Transportation Systems (ITSC), 2018, pp. 1-6.
[8] B. Lehmann, H. J. Günther, and L. Wolf, "A Generic Approach Towards Maneuver Coordination for Automated Vehicles," in IEEE Conference on Intelligent Transportation Systems, Proceedings, ITSC, 2018, pp. 3333-3339.
[9] I. Llatser, T. Michalke, M. Dolgov, F. Wildschütte, and H. Fuchs, "Cooperative Automated Driving Use Cases for 5G V2X Communication," in IEEE 5G World Forum (5GWF), 2019, pp. 120-125.
[10] A. Correa, R. Alms, J. Gozalvez, M. Sepulcre, M. Rondinone, R. Blokpoel, L. Lucken, and G. Thandavarayan, "Infrastructure Support for Cooperative Maneuvers in Connected and Automated Driving," in IEEE Intelligent Vehicles Symposium, 2019, pp. 20-25.
[11] D. Heß, R. Lattarulo, J. Pérez, T. Hesse, and F. Köster, "Negotiation of Cooperative Maneuvers for Automated Vehicles: Experimental Results," in IEEE International Conference on Intelligent Transportation Systems (ITSC), 2019, pp. 1545-1551.
[12] K. Franke, M. Düring, R. Balaghiasefi, M. Gonter, K. Lemmer, and F. Kücükay, "A Reference Architecture for CISS/CDAS within the Field of Cooperative Driving," in IEEE International Conference on Connected Vehicles and Expo (ICCVE), 2014, pp. 357-363.
[13] C. Frese, J. Beyerer, and P. Zimmer, "Cooperation of Cars and Formation of Cooperative Groups," in IEEE Intelligent Vehicles Symposium, Proceedings, 2007, pp. 227-232.
[14] B. Häfner, J. Jiru, K. Roscher, J. Ott, G. A. Schmitt, and Y. Sevilmis, "CVIP: A Protocol for Complex Interactions Among Connected Vehicles"; to be presented at 2020 IEEE Intelligent Vehicles Symposium (IV) October 20-23, 2020, Las Vegas, NV, USA (preprint available here: http://www.netlab.tkk.fi/~jo/papers/2020-10-iv-cvip-complex-maneuvers.pdf).

## Claims

1. A method of coordinating a maneuver among vehicles, the method comprising:
- Negotiating, by a first vehicle (HV), a maneuver with a second vehicle (RV1, RV2), wherein the maneuver is specified at least in terms of one or more target road resources (RR1, RR2, RR3) attributed to the first vehicle (HV) and one or more target road resources (RR4) attributed to the second vehicle (RV1), wherein a target road resource (RR1, RR2, RR3, RR4) comprises at least one area information and at least one time information, and wherein the negotiating comprises one or more iterations of transmitting, by the first vehicle (HV), a request message (CQM) from the first vehicle (HV) to the second vehicle (RV1, RV2) and receiving, by the first vehicle (HV), a response message (CRM) from the second vehicle (RV1, RV2);
- Determining, by the first vehicle (HV), that the first vehicle (HV) has entered an area of one of the target road resources (RR1, RR2, RR3) attributed to the first vehicle (HV) and/or determining that the first vehicle (HV) has left an area of one of the target road resources (RR1, RR2, RR3) attributed to the first vehicle (HV);
- in response to determining that the first vehicle (HV) has entered the area associated with the target road resource (RR1, RR2, RR3) attributed to the first vehicle (HV) and/or in response to determining that the first vehicle (HV) has left the area associated with the target road resource (RR1, RR2, RR3) attributed to the first vehicle (HV), transmitting, by the first vehicle (HV), a status message (MSM) from the first vehicle (HV) to the second vehicle (RV1, RV2), wherein the status message (MSM) comprises an identifier of the respective target road resource (RR1, RR2, RR3, RR4) and information indicating whether the respective area that is associated with the target road resource (RR1, RR2, RR3, RR4) has been entered or left.

2. The method of claim 1, further comprising: determining, by the second vehicle (RV1, RV2), based on information conveyed with the status message (MSM), whether the first vehicle (HV) uses the respective target road resource (RR, RR1, RR2, RR3) in accordance with the negotiated maneuver.

3. The method of one of the preceding claims, further comprising: reevaluating, by the second vehicle (RV1, RV2), based on information conveyed with the status message (MSM) transmitted from the first vehicle (HV) to the second vehicle (RV1, RV2), the participation of the second vehicle (RV1, RV2) in the negotiated maneuver.

4. The method of one of the preceding claims, comprising:
- determining, by the second vehicle (RV1, RV2), based on information conveyed with the status message (MSM) sent from the first vehicle (HV) to the second vehicle (RV1), a deviation between the first vehicle's (HV) use of the respective target road resource (RR1, RR2, RR3) and the negotiated maneuver; and
- in response to determining said deviation, transmitting, from the second vehicle (RV1) to the first vehicle (HV) at least one of the following:
∘ a cancellation message for one or more target road resources (RR4) attributed to the second vehicle (RV1);
∘ one or more alternative target road resources for the first vehicle (HV) and/or for the second vehicle (RV1).

5. The method of one of the preceding claims, wherein the status message (MSM) is transmitted from the first vehicle (HV) to the second vehicle (RV1, RV2) immediately when it has been determined that the first vehicle (HV) has entered the area associated with the target road resource (RR1, RR2, RR3) and/or immediately when it has been determined that the first vehicle (HV) has left the area associated with the target road resource (RR1, RR2, RR3).

6. The method of one of the preceding claims, comprising:
- transmitting a status message (MSM) from the first vehicle (HV) to the second vehicle (RV1, RV2) every time it has been determined that the first vehicle (HV) has entered an area associated with a target road resource (RR1, RR2, RR3) attributed to the first vehicle (HV) and/or every time it has been determined that the first vehicle (HV) has left an area associated with a target road resource (RR1, RR2, RR3) attributed to the first vehicle (HV).

7. The method of one of the preceding claims, wherein the method further comprises transmitting, by the second vehicle (RV1, RV2), a feedback message (MFM) in response to receiving a status message (MSM).

8. The method of claim 7, wherein the feedback message (MFM) repeats at least a part of the content of the received status message (MSM).

9. A vehicle configured for carrying out the steps carried out by the first vehicle (HV) and/or the second vehicle (RV1, RV2) as specified in one of the preceding claims.

10. A computer program comprising instructions which, when the program is executed by a vehicle, cause the vehicle to carry out the steps carried out by the first vehicle (HV) and/or the second vehicle (RV1, RV2) as specified in one of claims 1 to 8.

11. A computer-readable storage medium comprising instructions which, when executed by a vehicle, cause the vehicle to carry out the steps carried out by the first vehicle (HV) and/or the second vehicle (RV1, RV2) as specified in one of claims 1 to 8.

12. A data carrier signal carrying the computer program of claim 10.

## Patentansprüche

1. Ein Verfahren zur Koordinierung eines Manövers zwischen Fahrzeugen, das Verfahren umfassend:
• Aushandeln, durch ein erstes Fahrzeug (HV), eines Manövers mit einem zweiten Fahrzeug (RV1, RV2), wobei das Manöver mindestens in Bezug auf eine oder mehrere Zielstraßenressourcen (RR1, RR2, RR3), die dem ersten Fahrzeug (HV) zugeordnet sind, und eine oder mehrere Zielstraßenressourcen (RR4), die dem zweiten Fahrzeug (RV1) zugeordnet sind, spezifiziert ist, wobei eine Zielstraßenressource (RR1, RR2, RR3, RR4) mindestens eine Bereichsinformation und mindestens eine Zeitinformation umfasst, und wobei das Aushandeln eine oder mehrere Iterationen des Sendens, durch das erste Fahrzeug (HV), einer Anfragenachricht (CQM) vom ersten Fahrzeug (HV) an das zweite Fahrzeug (RV1, RV2) und des Empfangens einer Antwortnachricht (CRM) vom zweiten Fahrzeug (RV1, RV2) durch das erste Fahrzeug (HV) umfasst;
• Bestimmen, durch das erste Fahrzeug (HV), dass das erste Fahrzeug (HV) in einen Bereich einer der dem ersten Fahrzeug (HV) zugeordneten Zielstraßenressourcen (RR1, RR2, RR3) eingefahren ist und/oder Bestimmen, dass das erste Fahrzeug (HV) einen Bereich einer der dem ersten Fahrzeug (HV) zugeordneten Zielstraßenressourcen (RR1, RR2, RR3) verlassen hat;
• als Reaktion auf die Bestimmung, dass das erste Fahrzeug (HV) in den Bereich eingefahren ist, der der dem ersten Fahrzeug (HV) zugeordneten Zielstraßenressource (RR1, RR2, RR3) zugeordnet ist, und/oder als Reaktion auf die Bestimmung, dass das erste Fahrzeug (HV) den Bereich verlassen hat, der der dem ersten Fahrzeug (HV) zugeordneten Zielstraßenressource (RR1, RR2, RR3) zugeordnet ist, Senden einer Statusnachricht (MSM) vom ersten Fahrzeug (HV) an das zweite Fahrzeug (RV1, RV2), wobei die Statusnachricht (MSM) einen Identifikator der jeweiligen Zielstraßenressource (RR1, RR2, RR3, RR4) und Informationen umfasst, die angeben, ob der jeweilige Bereich, der der Zielstraßenressource (RR1, RR2, RR3, RR4) zugeordnet ist, befahren oder verlassen wurde.

2. Das Verfahren nach Anspruch 1, weiter umfassend: Bestimmen, durch das zweite Fahrzeug (RV1, RV2), basierend auf Informationen, die mit der Statusnachricht (MSM) übermittelt werden, ob das erste Fahrzeug (HV) die jeweilige Zielstraßenressource (RR, RR1, RR2, RR3) in Übereinstimmung mit dem ausgehandelten Manöver nutzt.

3. Das Verfahren nach einem der vorhergehenden Ansprüche, weiter umfassend: Neubewerten, durch das zweite Fahrzeug (RV1, RV2), basierend auf Informationen, die mit der vom ersten Fahrzeug (HV) an das zweite Fahrzeug (RV1, RV2) gesendeten Statusnachricht (MSM) übermittelt werden, der Teilnahme des zweiten Fahrzeugs (RV1, RV2) an dem ausgehandelten Manöver.

4. Das Verfahren nach einem der vorhergehenden Ansprüche, umfassend:
• Bestimmen, durch das zweite Fahrzeug (RV1, RV2), basierend auf Informationen, die mit der vom ersten Fahrzeug (HV) an das zweite Fahrzeug (RV1) gesendeten Statusnachricht (MSM) übermittelt werden, einer Abweichung zwischen der Nutzung der jeweiligen Zielstraßenressource (RR1, RR2, RR3) durch das erste Fahrzeug (HV) und dem ausgehandelten Manöver; und
• als Reaktion auf die Bestimmung der genannten Abweichung, Senden, vom zweiten Fahrzeug (RV1) an das erste Fahrzeug (HV), mindestens eines der folgenden:
- eine Stornierungsnachricht für eine oder mehrere dem zweiten Fahrzeug (RV1) zugeordnete Zielstraßenressourcen (RR4);
- eine oder mehrere alternative Zielstraßenressourcen für das erste Fahrzeug (HV) und/oder für das zweite Fahrzeug (RV1).

5. Das Verfahren nach einem der vorhergehenden Ansprüche, wobei die Statusnachricht (MSM) vom ersten Fahrzeug (HV) an das zweite Fahrzeug (RV1, RV2) unmittelbar gesendet wird, wenn bestimmt wurde, dass das erste Fahrzeug (HV) in den Bereich eingefahren ist, der der Zielstraßenressource (RR1, RR2, RR3) zugeordnet ist, und/oder unmittelbar, wenn bestimmt wurde, dass das erste Fahrzeug (HV) den Bereich verlassen hat, der der Zielstraßenressource (RR1, RR2, RR3) zugeordnet ist.

6. Das Verfahren nach einem der vorhergehenden Ansprüche, umfassend:
• Senden einer Statusnachricht (MSM) vom ersten Fahrzeug (HV) an das zweite Fahrzeug (RV1, RV2) jedes Mal, wenn bestimmt wurde, dass das erste Fahrzeug (HV) in einen Bereich eingefahren ist, der einer dem ersten Fahrzeug (HV) zugeordneten Zielstraßenressource (RR1, RR2, RR3) zugeordnet ist, und/oder jedes Mal, wenn bestimmt wurde, dass das erste Fahrzeug (HV) einen Bereich verlassen hat, der einer dem ersten Fahrzeug (HV) zugeordneten Zielstraßenressource (RR1, RR2, RR3) zugeordnet ist.

7. Das Verfahren nach einem der vorhergehenden Ansprüche, wobei das Verfahren weiter das Senden einer Rückmeldungsnachricht (MFM) durch das zweite Fahrzeug (RV1, RV2) als Reaktion auf den Empfang einer Statusnachricht (MSM) umfasst.

8. Das Verfahren nach Anspruch 7, wobei die Rückmeldungsnachricht (MFM) mindestens einen Teil des Inhalts der empfangenen Statusnachricht (MSM) wiederholt.

9. Ein Fahrzeug, das konfiguriert ist, um die Schritte auszuführen, die vom ersten Fahrzeug (HV) und/oder dem zweiten Fahrzeug (RV1, RV2) ausgeführt werden, wie in einem der vorhergehenden Ansprüche angegeben.

10. Ein Computerprogramm, das Anweisungen umfasst, die, wenn das Programm von einem Fahrzeug ausgeführt wird, das Fahrzeug veranlassen, die Schritte auszuführen, die vom ersten Fahrzeug (HV) und/oder dem zweiten Fahrzeug (RV1, RV2) ausgeführt werden, wie in einem der Ansprüche 1 bis 8 angegeben.

11. Ein computerlesbares Speichermedium, das Anweisungen umfasst, die, wenn sie von einem Fahrzeug ausgeführt werden, das Fahrzeug veranlassen, die Schritte auszuführen, die vom ersten Fahrzeug (HV) und/oder dem zweiten Fahrzeug (RV1, RV2) ausgeführt werden, wie in einem der Ansprüche 1 bis 8 angegeben.

12. Ein Datenträgersignal, das das Computerprogramm nach Anspruch 10 trägt.

## Revendications

1. Une méthode de coordination d'une manœuvre entre véhicules, la méthode comprenant :
• La négociation, par un premier véhicule (HV), d'une manœuvre avec un deuxième véhicule (RV1, RV2), où la manœuvre est spécifiée au moins en termes d'une ou plusieurs ressources routières cibles (RR1, RR2, RR3) attribuées au premier véhicule (HV) et d'une ou plusieurs ressources routières cibles (RR4) attribuées au deuxième véhicule (RV1), où une ressource routière cible (RR1, RR2, RR3, RR4) comprend au moins une information de zone et au moins une information de temps, et où la négociation comprend une ou plusieurs itérations de transmission, par le premier véhicule (HV), d'un message de demande (CQM) du premier véhicule (HV) au deuxième véhicule (RV1, RV2) et de réception, par le premier véhicule (HV), d'un message de réponse (CRM) du deuxième véhicule (RV1, RV2) ;
• La détermination, par le premier véhicule (HV), que le premier véhicule (HV) est entré dans une zone de l'une des ressources routières cibles (RR1, RR2, RR3) attribuées au premier véhicule (HV) et/ou la détermination que le premier véhicule (HV) a quitté une zone de l'une des ressources routières cibles (RR1, RR2, RR3) attribuées au premier véhicule (HV) ;
• En réponse à la détermination que le premier véhicule (HV) est entré dans la zone associée à la ressource routière cible (RR1, RR2, RR3) attribuée au premier véhicule (HV) et/ou en réponse à la détermination que le premier véhicule (HV) a quitté la zone associée à la ressource routière cible (RR1, RR2, RR3) attribuée au premier véhicule (HV), la transmission, par le premier véhicule (HV), d'un message d'état (MSM) du premier véhicule (HV) au deuxième véhicule (RV1, RV2), où le message d'état (MSM) comprend un identifiant de la ressource routière cible respective (RR1, RR2, RR3, RR4) et des informations indiquant si la zone respective associée à la ressource routière cible (RR1, RR2, RR3, RR4) a été entrée ou quittée.

2. La méthode selon la revendication 1, comprenant en outre : la détermination, par le deuxième véhicule (RV1, RV2), sur la base des informations transmises avec le message d'état (MSM), si le premier véhicule (HV) utilise la ressource routière cible respective (RR, RR1, RR2, RR3) conformément à la manœuvre négociée.

3. La méthode selon l'une des revendications précédentes, comprenant en outre : la réévaluation, par le deuxième véhicule (RV1, RV2), sur la base des informations transmises avec le message d'état (MSM) transmis du premier véhicule (HV) au deuxième véhicule (RV1, RV2), de la participation du deuxième véhicule (RV1, RV2) à la manœuvre négociée.

4. La méthode selon l'une des revendications précédentes, comprenant :
• La détermination, par le deuxième véhicule (RV1, RV2), sur la base des informations transmises avec le message d'état (MSM) envoyé du premier véhicule (HV) au deuxième véhicule (RV1), d'un écart entre l'utilisation par le premier véhicule (HV) de la ressource routière cible respective (RR1, RR2, RR3) et la manœuvre négociée ; et
• En réponse à la détermination dudit écart, la transmission, du deuxième véhicule (RV1) au premier véhicule (HV) d'au moins l'un des éléments suivants :
- Un message d'annulation pour une ou plusieurs ressources routières cibles (RR4) attribuées au deuxième véhicule (RV1) ;
- Une ou plusieurs ressources routières cibles alternatives pour le premier véhicule (HV) et/ou pour le deuxième véhicule (RV1).

5. La méthode selon l'une des revendications précédentes, où le message d'état (MSM) est transmis du premier véhicule (HV) au deuxième véhicule (RV1, RV2) immédiatement lorsqu'il a été déterminé que le premier véhicule (HV) est entré dans la zone associée à la ressource routière cible (RR1, RR2, RR3) et/ou immédiatement lorsqu'il a été déterminé que le premier véhicule (HV) a quitté la zone associée à la ressource routière cible (RR1, RR2, RR3).

6. La méthode selon l'une des revendications précédentes, comprenant :
• La transmission d'un message d'état (MSM) du premier véhicule (HV) au deuxième véhicule (RV1, RV2) chaque fois qu'il a été déterminé que le premier véhicule (HV) est entré dans une zone associée à une ressource routière cible (RR1, RR2, RR3) attribuée au premier véhicule (HV) et/ou chaque fois qu'il a été déterminé que le premier véhicule (HV) a quitté une zone associée à une ressource routière cible (RR1, RR2, RR3) attribuée au premier véhicule (HV).

7. La méthode selon l'une des revendications précédentes, où la méthode comprend en outre la transmission, par le deuxième véhicule (RV1, RV2), d'un message de retour (MFM) en réponse à la réception d'un message d'état (MSM).

8. La méthode selon la revendication 7, où le message de retour (MFM) répète au moins une partie du contenu du message d'état (MSM) reçu.

9. Un véhicule configuré pour exécuter les étapes effectuées par le premier véhicule (HV) et/ou le deuxième véhicule (RV1, RV2) comme spécifié dans l'une des revendications précédentes.

10. Un programme informatique comprenant des instructions qui, lorsque le programme est exécuté par un véhicule, amènent le véhicule à exécuter les étapes effectuées par le premier véhicule (HV) et/ou le deuxième véhicule (RV1, RV2) comme spécifié dans l'une des revendications 1 à 8.

11. Un support de stockage lisible par ordinateur comprenant des instructions qui, lorsqu'elles sont exécutées par un véhicule, amènent le véhicule à exécuter les étapes effectuées par le premier véhicule (HV) et/ou le deuxième véhicule (RV1, RV2) comme spécifié dans l'une des revendications 1 à 8.

12. Un signal de support de données portant le programme informatique selon la revendication 10.
